# EUROPÄISCHE PATENTANMELDUNG

(11) **EP 1 936 215 A2**
(43) Veröffentlichungstag der Anmeldung: **25.06.2008**
(21) Anmeldenummer: 07122057.8
(22) Anmeldetag: 03.12.2007
(51) Int. Cl.: F16C 19/06, F16C 19/26, F16C 19/36, F16C 19/54

(54) **Lageranordnung für eine Nebenabtriebswelle**

(30) Priorität: 22.12.2006 DE 102006061258
(71) Anmelder: ZF Friedrichshafen AG, 88038 Friedrichshafen (DE)
(72) Erfinder: Lanz, Hermann, 88699 Frickingen (DE); Müller, Walter, 88046 Friedrichshafen (DE)

(57) **Zusammenfassung**

Es wird eine Lageranordnung für eine Nebenabtriebswelle (1), insbesondere für eine PTO-Welle (1), in einem Getriebe, insbesondere einem Mehrstufengetriebe, bei einem Nutzfahrzeug vorgeschlagen, wobei die Nebenabtriebswelle (1) über ein Zwischenrad (3) des Getriebes antreibbar ist und wobei zumindest eine antriebsseitige Lagerung (7, 10) und eine abtriebsseitige Lagerung (9) an der Nebenabtriebswelle (1) angeordnet sind. Erfindungsgemäß wird als antriebsseitige Lagerung zumindest ein Radiallager (7, 10) und als abtriebsseitige Lagerung ein Kegelrollenlager (9) vorgesehen.

## Beschreibung

Die vorliegende Erfindung betrifft eine Lageranordnung für eine Nebenabtriebswelle gemäß der im Oberbegriff des Patentanspruches 1 näher definierten Art.

Aus der Fahrzeugtechnik sind Handschaltgetriebe, automatisierte und automatische Getriebe beispielsweise für Nutzkraftfahrzeuge bekannt. Derartige Getriebe können auch mit Nebenabtriebswellen ausgerüstet sein, mit denen Nebenantriebe der Nutzfahrzeuge angetrieben werden können. Als Nebenantriebe sind beispielsweise Hydraulikpumpen, Turbinen oder dergleichen Aggregate vorgesehen. Bei den Nutzfahrzeugen werden mit diesen Aggregaten z. B. Aufbauten angetrieben werden.

Für die Nebenabtriebswelle ist eine Lageranordnung in dem Getriebe erforderlich. Als Nebenabtriebswelle kann z. B. eine PTO-Welle vorgesehen sein, die bei dem bekannten Getriebe über eine Stirnradverzahnung durch ein Zwischenrad angetrieben wird. Dazu sind an der PTO-Welle eine antriebsseitige Lagerung und eine abtriebsseitige Lagerung vorgesehen. Bei der bekannten Lageranordnung wird für die antriebsseitige Lagerung und die abtriebsseitige Lagerung jeweils ein Kegelrollenlager verwendet.

Um auch eine Nachrüstung der PTO-Welle bei dem Fahrzeug zu ermöglichen, ist auch bei der Grundausführung des Getriebes ohne PTO-Welle zumindest der Außenring des antriebseitigen Kegeirollenlagers bereits in dem Getriebegehäuse montiert. Ansonsten wäre eine Nachrüstung der PTO-Welle später im Feld nicht mehr möglich. Dies führt jedoch zu Mehrkosten bei der Grundausführung des Getriebes.

Ferner hat sich gezeigt, dass die beim Betrieb der PTO-Welle auftretende Verzahnungskraft nahezu ausschließlich abtriebsseitig auf die Lageranordnung wirkt. Infolgedessen wird das antriebsseitige Kegelrollenlager dadurch axial entlastet und bei dem vorhandenen Axialspiel führt dies zu einem geringen Traganteil der Kegelrollen im antriebsseitigen Lager. Somit wird die Lebensdauer der bekannten Lageranordnung verkürzt. Durch die axial unkorrekte Position des Kegelrollenlagers kann eine Schiefstellung der PTO-Welle auftreten, die auch zu einer verminderten Lebensdauer am abtriebsseitigen Kegelroilenlager führt.

Ein weiterer Nachteil eines Axiallagers bei der Lageranordnung liegt darin, dass es bei der Montage axial eingestellt werden muss. Wenn die Montage im Rahmen einer Nachrüstung erfolgt, kann dies zu Problemen führen.

Demnach liegt der vorliegenden Erfindung die Aufgabe zugrunde, eine Lageranordnung der eingangs beschriebenen Gattung vorzuschlagen, welche möglichst einfach nachrüstbar und zu dem kostengünstig ist.

Diese Aufgabe wird durch die Merkmale des Patentanspruches 1 gelöst. Weitere vorteilhafte Ausgestaltungen ergeben sich insbesondere aus den Unteransprüchen.

Somit wird eine Lageranordnung für eine Nebenabtriebswelle, insbesondere für eine PTO-Welle, in einem Getriebe eines Nutzfahrzeugs vorgeschlagen, wobei die Nebenabtriebswelle über ein Zwischenrad des Getriebes antreibbar ist und wobei zumindest eine antriebsseitige Lagerung und eine abtriebsseitige Lagerung an der Nebenabtriebswelle angeordnet sind. Erfindungsgemäß wird als antriebsseitige Lagerung zumindest ein Radiallager oder dergleichen vorgesehen. Dieses Radiallager weist nur eine geringe axiale Lastfähigkeit auf.

Auf diese Weise ist auch ein Nachrüsten einer Nebenabtriebswelle, insbesondere einer PTO-Welle, bei dem Nutzfahrzeug ohne weiteres möglich. Durch den Einsatz eines Radiallagers als antriebsseitige Lagerung sind bei der Grundausführung des Getriebes ohne Nebenabtriebswelle keine Vorkehrungen für eine solche Nebenabtriebswelle erforderlich. Darüber hinaus sind die Radiallager besonders einfach zu montieren und erfordern keine zusätzlichen Einstellungen bei der Nachrüstung. Infolge dessen wird eine besonders kostengünstige und einfache Nachrüstung, z. B. einer PTO-Welle, mit der erfindungsgemäßen Lageranordnung ermöglicht. Zur abtriebsseitigen Lagerung der Nebenabtriebswelle wird ein Kegelrollenlager verwendet. Dies ist von Vorteil, da die Verzahnungskraft zwischen der Nebenabtriebswelle und dem Zwischenrad nahezu ausschließlich in Richtung des Abtriebes wirkt. Deshalb kann das abtriebsseitige Kegelrollenlager diese Axialkraft aufnehmen.

Als antriebsseitiges Radiallager kann vorzugsweise ein Zylinderrollenlager, ein Rillenkugellager oder dergleichen verwendet werden. Durch den Einsatz dieser Lager an der Antriebseite kann die z. B. als PTO-Welle ausgebildete Nebenabtriebswelle zum Nachrüsten von der Abtriebsseite in das Getriebegehäuse eingebaut und montiert werden. Auf diese Weise kann die Nachrüstung im Felde, d. h. beim Kunden während des Gebrauchs des Fahrzeuges nachträglich ohne weiteres durchgeführt werden.

Vorzugsweise kann die PTO-Welle über ein bereits vorhandenes Rückwärtsgang-Zwischenrad an das Getriebe angebunden werden. Es sind auch andere Anordnungsmöglichkeiten im Getriebe denkbar.

Bei der erfindungsgemäßen Lageranordnung wird der maximale Außendurchmesser des Außenringes des antriebsseitigen Radiallagers derart gewählt, dass dieser am Außendurchmesser des Rückwärtsgangrades vorbeigeschoben werden kann, so dass dort keine Bauteilkollision auftritt. Auf diese Weise kann die PTO-Welle ohne weiteres in das Getriebegehäuse eingeführt und verbaut werden. Besonders vorteilhaft ist es, wenn das antriebsseitige Radiallager mit einer Spielpassung im Getriebegehäuse ausgelegt ist. Somit kann der Außenring des Radiallagers einfach in das Getriebegehäuse eingepasst werden, ohne dass zusätzliche Arbeitsschritte erforderlich sind.

Nachfolgend wird die vorliegende Erfindung anhand der Zeichnungen näher erläutert.
Es zeigen:
- Fig. 1: eine geschnittene, schematische Teilansicht eines Getriebegehäuses mit einer ersten Ausführungsvariante der erfindungsgemäßen Lageranordnung für eine Nebenabtriebswelle und
- Fig. 2: eine geschnittene, schematische Teilansicht des Getriebegehäuses mit einer zweiten Ausführungsvariante der erfindungsgemäßen Lageranordnung.

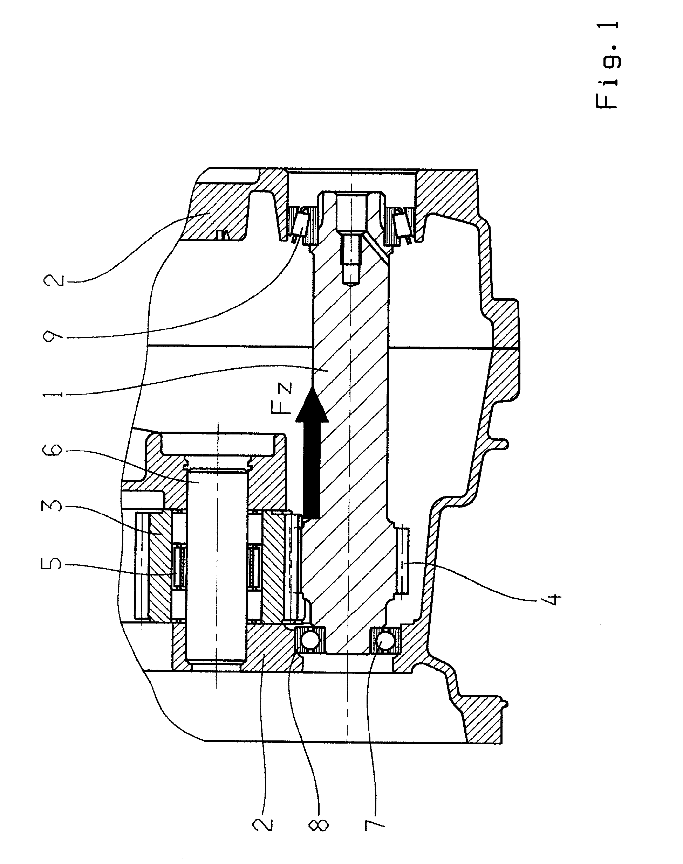

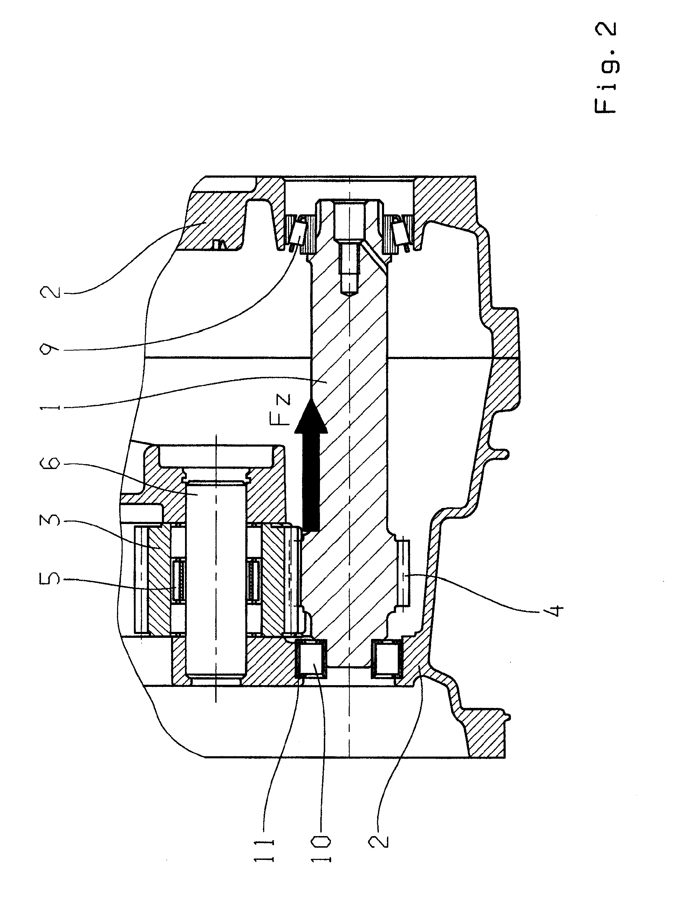

In den Fig. 1 und 2 sind zwei verschiedene Ausführungsvarianten einer erfindungsgemäßen Lageranordnung für eine PTO-Welle 1 als Nebenabtriebswelle in einem nur teilweise dargestellten Getriebe für ein Nutzfahrzeug dargestellt

Die PTO-Welle 1 wird mit einer Laderanordnung in das Getriebe eingebaut. Die Lageranordnung weist unabhängig von der jeweiligen Ausführungsvariante eine antriebsseitige Lagerung und eine abtriebsseitige Lagerung in dem Getriebegehäuse 2 auf. Die PTO-Welle 1 wird durch eine Stirnradverzahnung über ein Rückwärtsgang-Zwischenrad 3 angetrieben. Die Stirnradverzahnung umfasst das Rückwärtsgang-Zwischenrad 3 und eine an die PTO-Welle 1 angeformte Verzahnung 4. Das Rückwärtsgang-Zwischenrad 3 ist über ein Wälzlager 5 an einem Rückwärtsgangbolzen 6 drehbar gelagert.

Erfindungsgemäß ist an der PTO-Welle 1 antriebsseitig ein Radiallager vorgesehen, welches bei der in Fig. 1 dargestellten Ausführungsvariante ein Rillenkugellager 7 ist. Das Rillenkugellager 7 wird über eine Spielpassung in das Getriebegehäuse 2 eingepasst. Der maximale Außendurchmesser des Außenringes 8 des Rillenkugellagers 7 ist so vorgesehen, dass er an dem Außendurchmesser des Rückwärtsgang-Zwischenrades 3 vorbeigeschoben werden kann. Somit kann die PTO-Welle 1 abtriebsseitig, d. h. in der Zeichnungsebene von rechts, in das Getriebegehäuse 2 auch nachträglich eingebaut werden. Als abtriebsseitige Lagerung der PTO-Welle 1 ist ein Kegelrollenlager 9 vorgesehen, welches die in Abtriebsrichtung wirkende Verzahnungskraft aufnehmen kann, welche in Fig. 1 und 2 durch einen Pfeil F_{z} angedeutet ist.

In Fig. 2 ist eine zweite Ausführungsvariante der erfindungsgemäßen Lageranordnung dargestellt. Im Unterschied zu der ersten Ausführungsvariante gemäß Fig. 1 ist bei der zweiten Ausführungsvariante als antriebsseitige Lagerung ein Zylinderrollenlager 10 vorgesehen. Auch bei der zweiten Ausführungsvariante ist als abtriebsseitige Lagerung das Kegelrollenlager 9 zum Aufnehmen der axial wirkenden Verzahnungskraft Fz vorgesehen. Das Zylinderrollenlager 10 weist ebenfalls einen Außenring 11 auf, der einen maximalen Außendurchmesser aufweist, der an dem Außendurchmesser des Rückwärtsgang-Zwischenrades 3 vorbeigeschoben werden kann. Der Außenring 11 des Zylinderrollenlagers 10 wird wieder über eine Spielpassung in das Getnebegehäuse 2 eingepasst.

### Bezugszeichen

- 1: PTO-Welle
- 2: Getriebegehäuse
- 3: Rückwärtsgang-Zwischenrad
- 4: Verzahnung
- 5: Wälzlager
- 6: Rückwärtsgangbolzen
- 7: Rillenkugellager
- 8: Außenring des Rillenkugellager
- 9: Kegelrollenlager
- 10: Zylinderrollenlager
- 11: Außenring des Zylinderrollenlagers

- F_{z}: Verzahnungskraft

## Patentansprüche

1. Lageranordnung für eine Nebenabtriebswelle (1), insbesondere für eine PTO-Welle (1), in einem Getriebe eines Nutzfahrzeugs, wobei die Nebenabtriebswelle (1) über ein Zwischenrad (3) des Getriebes antreibbar ist und wobei zumindest eine antriebsseitige Lagerung (7, 10) und eine abtriebsseitige Lagerung (9) an der Nebenabtriebswelle (1) angeordnet sind, **dadurch gekennzeichnet, dass** als antriebsseitige Lagerung zumindest ein Radiallager (7, 10) vorgesehen und als abtriebsseitige Lagerung ein Kegelrollenlager (9) vorgesehen ist.

2. Lageranordnung nach Anspruch 1, **dadurch gekennzeichnet, dass** als antriebsseitiges Radiallager ein Zylinderrollenlager (10) vorgesehen ist.

3. Lageranordnung nach Anspruch 1, **dadurch gekennzeichnet, dass** als antriebsseitiges Radiallager ein Rillenkugellager (7) vorgesehen ist.

4. Lageranordnung nach einem der vorangehenden Ansprüche, **dadurch gekennzeichnet, dass** die als PTO-Welle (1) ausgebildete Nebenabtriebswelle zum Nachrüsten abtriebsseitig in das Getriebegehäuse (2) einbaubar ist.

5. Lageranordnung nach einem der vorangehenden Ansprüche, **dadurch gekennzeichnet, dass** die PTO-Welle (1) über ein Rückwärtsgang-Zwischenrad (3) an das Getriebe angebunden ist.

6. Lageranordnung nach Anspruch 4, **dadurch gekennzeichnet, dass** der maximale Außendurchmesser des Außenringes (8, 11) des antriebsseitigen Radiallagers der PTO-Welle (1) so vorgesehen ist, dass der Außenring (8, 11) am Außendurchmesser des Rückwärtsgang-Zwischenrades (3) vorbeischiebbar ist.

7. Lageranordnung nach einem der vorangehenden Ansprüche, **dadurch gekennzeichnet, dass** der Außenring (8, 11) des antriebsseitigen Radiallagers der PTO-Welle (1) mit einer Spielpassung in das Getriebegehäuse (2) eingepasst ist.
